# EUROPÄISCHE PATENTSCHRIFT

(11) **EP 2 420 459 B1**
(45) Veröffentlichungstag und Bekanntmachung des Hinweises auf die Patenterteilung: **07.11.2012**
(21) Anmeldenummer: 10173570.2
(22) Anmeldetag: 20.08.2010
(51) Int. Cl.: B65G 21/20, B65H 5/22

(54) **Vakuumförderer zum Transportieren von insbesondere flächigen Gegenständen**
Vacuum transporter for transporting objects, in particular flat objects
Transporteur à dépression, notamment pour le transport d'objets plats

(43) Veröffentlichungstag der Anmeldung: 22.02.2012
(73) Patentinhaber: Dividella AG, 9472 Grabs (CH)
(72) Erfinder: Traber, Roman, 9451, Kriessern (CH); Hammer, Christoph, 8200, Schaffhausen (CH)
(74) Vertreter: Hepp Wenger Ryffel AG

(56) Entgegenhaltungen:
- DE-A1-102005 007 472
- DE-U1- 20 211 007
- US-A- 3 889 801

## Beschreibung

Die vorliegende Erfindung betrifft einen Vakuumförderer zum Transportieren von insbesondere flächigen Gegenständen, gemäss dem Oberbegriff von Anspruch 1.

Aus dem Stand der Technik sind Vakuumförderer bekannt, welche einen zu transportierenden Gegenstand mittels eines Unterdrucks auf einer Trägereinheit fixieren.

EP 1857288 A2 zeigt beispielsweise eine Fördervorrichtung zum Transportieren von CD-ROMs. Dabei wird ein Transportband, welches die Trägereinheit direkt umfasst über eine Vakuumkammer bewegt. Die Trägereinheiten weisen auf der dem zu transportierenden Gegenstand zugeordneten Seite ringförmige Nuten auf, welche mit Bohrungen durch das Transportband versehen sind. Die Vakuumkammer ist mit einem Schlitzmuster versehen. Das Schlitzmuster und die Bohrungen der Trägereinheiten sind so angeordnet, dass immer mindestens eine Bohrung jeder ringförmigen Nut mit einem Schlitz der Vakuumkammer korrespondiert und somit der Unterdruck in der ringförmigen Nut jederzeit aufrecht erhalten werden kann. Nachteilig bei dieser Vorrichtung ist, dass ein Wechsel des zu transportierenden Gutes einen aufwändigen Wechsel des Transportbandes bedingt. Ausserdem bewirken nicht befüllte Trägereinheiten eine hohe Leckage im Unterdrucksystem.

In EP 2116489 A1 wird eine Transportvorrichtung gezeigt, wobei Transportschlitten mit Anschlussöffnungen und eine Unterdruckleitung mit entsprechenden Zapföffnungen vorgesehen sind. Die Zapföffnungen sind mit Sperrventilen versehen, welche je nach Position der Transportschlitten für eine bestimmte Zeitdauer geöffnet bzw. verschlossen werden. Hierzu ist eine komplexe Steuerung nötig. Ausserdem ist ein Wechsel des zu transportierenden Gutes nur schwer möglich, da der ganze Transportschlitten ausgewechselt und die Steuerung angepasst werden muss.

Die DE 202 11 007 beschreibt einen gattungsgemäßen Vakuumförderen für eine Fördervorrichtung zum insbesondere hängenden Transport von Werkstücken. An einem Gurtkörper mit Unterdruckdurchführungen ist eine Anzahl von Saugnäpfen angebracht, deren Innenflächen in Wirkverbindung mit den Unterdruckdurchführungen stehen. Die Saugnäpfe sind lösbar an Halteelementen befestigt, die fest mit dem Gurtkörper verbunden sind.

Die DE 10 2005 007 472 beschreibt einen Vakuumförderer, zum Transport von plattenförmigen Werkstücken mittels Unterdruck. An einem Fördergurt sind einzelne Saugblöcke angeordnet, in denen Unterdruck erzeugende Organe vorhanden sind. Die zu transportierenden Werkstücke sind an einer Saugmuschel am Oberteil jedes Saugblockes gehalten.

Es ist Aufgabe der Erfindung, die Nachteile des Standes der Technik zu überwinden. Insbesondere soll eine Vorrichtung zur Verfügung gestellt werden, welche einfach an die Anforderungen des zu transportierenden Gegenstandes angepasst werden kann.

Diese Aufgabe wird durch die im unabhängigen Patentanspruch definierte Vorrichtung gelöst. Weitere Ausführungsformen ergeben sich aus den abhängigen Patentansprüchen.

Ein erfindungsgemässer Vakuumförderer zum Transportieren von insbesondere flächigen Gegenständen umfasst wenigstens ein Transportband, eine mit einem Unterdruck beaufschlagbare Vakuumkammer, und eine Trägereinheit. Dabei wird die Vakuumkammer einseitig durch das Transportband abgeschlossen. Mehrere Trägereinheiten sind in Förderrichtung hintereinander auf dem Transportband angeordnet. Jede Trägereinheit steht mittels mindestens eines Anschlusskanals mit der Vakuumkammer in Wirkverbindung. Ausserdem sind auf den Trägereinheiten Verteilerplatten mit mehreren Saugöffnungen lösbar befestigt. Jede Verteilerplatte weist ein Kanalsystem auf, welches die Saugöffnungen mit dem Anschlusskanal verbindet.

Dadurch, dass die Vakuumkammer einseitig durch das Transportband abgeschlossen ist, liegt der in der Vakuumkammer vorherrschende Unterdruck auch am Transportband an. Durch den Anschlusskanal der Trägereinheit und das Kanalsystem der Verteilerplatte wirkt der Unterdruck der Vakuumkammer an den Saugöffnungen der Verteilerplatte und kann somit einen zu transportierenden Gegenstand festhalten. Es versteht sich von selbst, dass je nach Anwendung eine Verteilerplatte mit mehreren Saugöffnungen zur Anwendung kommt.

Jeder Anschlusskanal der Trägereinheit kann ein Verschlusselement aufweisen, welches ein selektives Verschliessen des entsprechenden Anschlusskanals erlaubt. Somit können Anschlusskanäle von Trägereinheiten, welche nicht mit einer Verteilerplatte bestückt sind, geschlossen werden. Auch kann in Situationen, bei denen nicht jede Verteilerplatte einen zu transportierenden Gegenstand aufnimmt, die Unterdruckversorgung dieser Verteilerplatte unterbrochen werden. Ein unnötiger Druckverlust wird somit vermieden.

Das Verschlusselement kann als Schieber ausgebildet sein. Ausserdem kann dieser Schieber ein Betätigungsmittel aufweisen, welche seitlich über die Trägereinheit hervorsteht. Somit wird ein Betätigen des Verschlusselementes sehr einfach und kann sogar in einer Fertigungsstrasse automatisiert erfolgen.

Die Vakuumkammer kann als Hohlprofil ausgebildet sein und auf der dem Transportband zugeordneten Seite zwei nebeneinander angeordnete und durch einen Spalt voneinander getrennte Gleitplatten aufweisen. Diese Gleitplatten verringern die Reibung des Transportbandes auf der Vakuumkammer. Dabei können das Hohlprofil der Vakuumkammer und die Gleitplatten einstückig ausgestaltet sein. Bei der Verwendung von verschiednen Materialien bzw. bei einer mehrteiligen Ausgestaltung kann das Hohlprofil beispielsweise aus einem Material bestehen, welches gute Eigenschaften bezüglich Stabilität aufweist, während das Material der Gleitplatten bezüglich eines geringen Reibungskoeffizienten optimiert ist. Die Gleitplatten können durchgehend aus demselben Material bestehen oder aber eine Beschichtung aufweisen, welche die Reibung reduziert. Für das Hohlprofil kommt beispielsweise Metall, insbesondere Stahlblech in Frage. Als Material für die Gleitplatten kann hartanodisiertes Aluminium oder rostfreier Stahl verwendet werden. Andere Materialien sind ebenfalls denkbar.

Das Transportband kann im Bereich des Spaltes einen Vakuumriemen umfassen, welcher optimiert auf eine möglichst geringe Leckage trotz Relativbewegung zur Gleitplatte ausgelegt ist. Seitlich neben dem Vakuumriemen ist vorzugsweise je ein Zugriemen angeordnet, welcher die beim Transport der Gegenstände auftretenden mechanischen Kräfte aufnimmt. Ausserdem können die Trägereinheiten mit diesen Zugriemen verbunden sein. Sowohl für den Vakuumriemen als auch für die Zugriemen können handelsübliche Zahnriemen aus Polyurethan mit Stahldrahtsträngen verwendet werden. Um die Gleiteigenschaften bezüglich der Gleitplatten zu verbessern, können diese Riemen auf der Zahnseite mit einem Polyamidgewebe beschichtet sein. Beim Vakuumriemen wird im mittleren Bereich die Zahnung weggefräst und dann die entstandene Fläche wiederum mit Polyamidgewebe beschichtet. Es versteht sich von selbst, dass auch andere Materialien oder Materialkombinationen sowohl für die Zugriemen als auch für den Vakuumriemen verwendet werden können. Die Zähne des Vakuumriemens und der Zugriemen können in die Umlenkrollen eingreifen, welche ebenfalls entsprechend verzahnt sein können. Somit ist einerseits der Antrieb des Transportbandes sichergestellt und gleichzeitig kann eine absolut synchrone Bewegung von Vakuumband und Zugbändern erreicht werden. Es kann somit auf eine physikalische Verbindung zwischen Vakuumband und den Zugbändern verzichtet werden, was insbesondere eine leichte Austauschbarkeit ermöglicht.

Die Verteilerplatte kann ein oder mehrere Verriegelungsmittel aufweisen, welche ein lösbares Verriegeln mit an der Trägereinheit befestigten Verriegelungselementen erlaubt. Durch eine lösbare Anordnung der Verteilerplatte auf der Trägereinheit wird ermöglicht, dass die Verteilerplatten modular sind und eine auf den jeweils zu transportierenden Gegenstand optimierte Verteilerplatte verwendet wird. So können beispielsweise für grosse Gegenstände mehrere nebeneinander angeordnete Verteilerplatten vorgesehen werden, so dass sich der Gegenstand auf mehreren Verteilerplatten abstützt. Ebenso ist es möglich, dass für kleine Gegenstände Verteilerplatten zum Einsatz kommen, welche Saugöffnungen nur in einem kleinen Bereich der Verteilplatte aufweisen. Ein unnötiger Druckverlust durch nicht abgedeckte Saugöffnungen wird somit verhindert.

Das Verriegelungsmittel der Verteilerplatte kann mit dem Verriegelungselement der Trägereinheit verrastbar sein. Dies erlaubt ein einfaches und effizientes Auswechseln der Verteilerplatten. Dabei kann das Verriegelungsmittel ein Auslösetaster sein. Wenn dieser Auslösetaster seitlich über die Verteilerplatte hervorsteht, ist eine besonders einfache Betätigung gewährleistet.

Die Trägereinheiten können eine Kodierung aufweisen, so dass nur dieser Kodierung korrespondierend ausgestaltete Verteilplatten auf den Trägereinheiten befestigbar sind. Eine solche Kodierung kann beispielsweise mittels Kodierbolzen realisiert werden. Durch eine Kodierung kann auf einfache Weise eine korrekte Reihenfolge der Verteilplatten, insbesondere für Gegenstände, welche über mehrere Trägereinheiten hinausreichen und verschieden ausgestaltete Verteilplatten bedingen, garantiert werden.

Für gewisse Arbeitsschritte ist es unumgänglich, dass die zu transportierenden Gegenstände sehr präzise geführt werden. Insbesondere bei der Zuführung zu einer Druckstation für Mehrfarbendruck oder an eine Schneidstation ist eine hohe Präzision nötig. Hierzu können die Trägereinheiten insbesondere seitlich an Führungsschienen geführt sein. Solche Führungsschienen können beispielsweise direkt mit der Vakuumkammer verbunden sein. Es ist aber auch denkbar, dass diese Führungsschienen an den Gleitplatten befestigt sind.

Anhand von Figuren, welche lediglich Ausführungsbeispiele darstellen, wird die Erfindung im Folgenden näher erläutert. Es zeigen:
- Figur 1:: in einer perspektivischen Darstellung einen erfindungsgemässen Vakuumförderer, wobei nicht alle Verteilerplatten dargestellt sind,
- Figur 2:: einen Querschnitt durch den Vakuumförderer gemäss Figur 1 quer zur Laufrichtung des Transportbandes,
- Figur 3:: einen vergrösserten Ausschnitt einer Trägereinheit aus der Darstellung gemäss Figur 1,
- Figur 4:: eine perspektivische Darstellung einer einzigen Trägereinheit mit Auslösetaster einer Verteilerplatte,
- Figur 5:: eine vergrösserte Ansicht auf das Verriegelungselement gemäss Figur 4, wobei das Verriegelungselement mit der Trägereinheit verriegelt ist,
- Figur 6:: einen Querschnitt entlang der Linie A-A gemäss Figur 5,
- Figur 7:: die Ansicht gemäss Figur 5, wobei das Verriegelungselement von der Trägereinheit gelöst ist,
- Figur 8:: einen Querschnitt entlang der Linie B-B gemäss Figur 7,
- Figur 9:: einen Querschnitt durch einen Anschlusskanal einer Trägereinheit mit Verteilerplatte quer zur Laufrichtung des Bandes, wobei der Anschlusskanal verschlossen ist,
- Figur 10a:: eine vergrösserte Darstellung des verschlossenen Anschlusskanals gemäss Figur 9,
- Figur 10b:: die Darstellung gemäss Figur 10a, wobei der Anschlusskanals offen ist,
- Figur 11a :: eine schematische Darstellung eines flächigen Gegenstandes auf zwei Verteilerplatten mit entsprechenden Saugöffnungen, und
- Figur 11b :: die Darstellung gemäss Figur 11a, wobei der flächige Gegenstand eine andere Form aufweist.

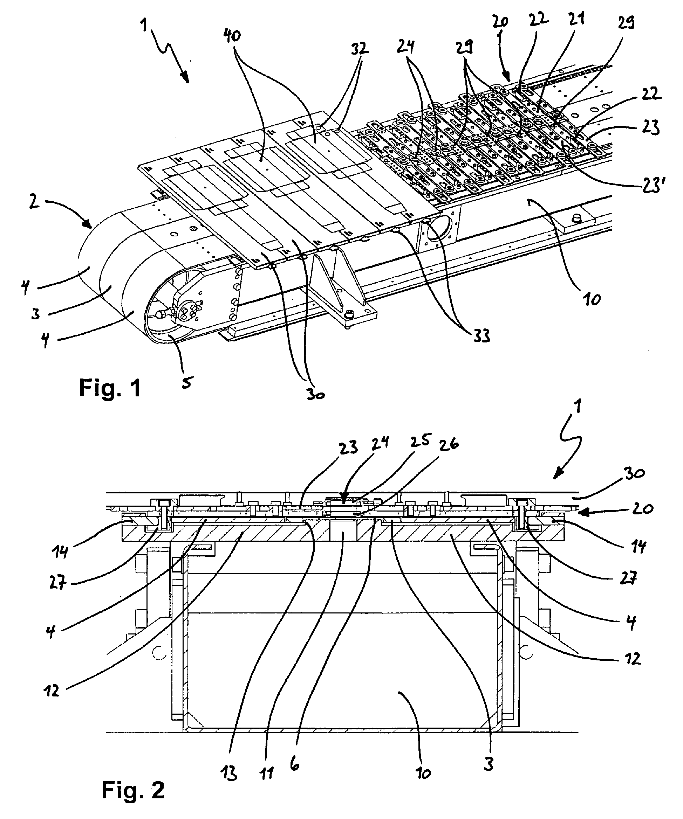

Figur 1 zeigt in einer perspektivischen Darstellung einen erfindungsgemässen Vakuumförderer 1, wobei einzelne Trägereinheiten 20 und einzelne Verteilerplatten 30 dargestellt sind. Der Vakuumförderer 1 umfasst im Wesentlichen ein Transportband 2, welches von zwei Umlenkrollen 5 (nur eine Umlenkrolle ist dargestellt) gespannt und über eine Vakuumkammer 10 bewegt wird. Der Antrieb des Transportbandes 2 kann direkt über die Umlenkrollen 5 oder über eine separate Antriebsrolle erfolgen. Im gezeigten Ausführungsbeispiel ist nur eine der beiden Umlenkrollen 5 angetrieben. Diese eine Umlenkrolle 5 weist eine aussenliegende Verzahnung auf, welche mit einer Verzahnung des Transportbandes 2 einen Formschluss bewirkt. Die zweite Umlenkrolle kann ebenfalls verzahnt sein oder eine glatte Umfangsfläche aufweisen. Die Vakuumkammer 10 ist zwischen den Umlenkrollen 5 angeordnet und mit einem Unterdruck beaufschlagt. Die Vakuumkammer 10 weist auf der dem Transportband 2 zugeordneten Seite einen Spalt 11 (siehe Figur 2) auf. Dabei wird das Transportband 2 so über die Vakuumkammer 10 geführt, dass der Spalt 11 vom Transportband 2 verschlossen wird.

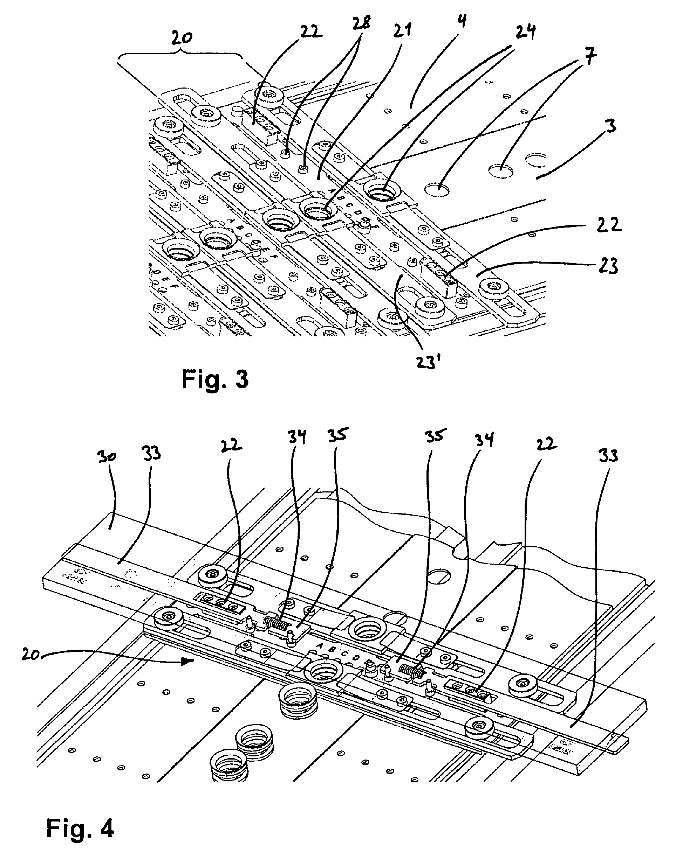

Das Transportband 2 ist dabei mehrteilig ausgebildet. Zur optimalen Abdichtung zur Vakuumkammer 10 weist das Transportband 2 einen in etwa mittig angeordneten Vakuumriemen 3 auf. Seitlich vom Vakuumriemen 3 ist zur Aufnahme der beim Transport auftretenden Kräfte je ein Zugriemen 4 angeordnet. Sowohl der Vakuumriemen 3 als auch die beiden Zugriemen 4 sind handelsübliche Zahnriemen. Dadurch, dass alle Bänder in die Verzahnung mindestens einer Umlenkrolle 5 eingreifen, ist der Vakuumriemen 3 mit den beiden Zugriemen 4 formschlüssig synchronisiert. Sowohl der Vakuumriemen als auch die Zugriemen 4 bestehen vorzugsweise aus handelsüblichen Zahnriemen aus Polyurethan mit Stahldrahtzugsträngen. Um die Gleiteigenschaften bezüglich der Gleitplatten 12 zu verbessern, sind diese Riemen 3,4 auf der Zahnseite mit einem Polyamidgewebe beschichtet. Die Zahnriemen weisen eine Zahnteilung von 10mm auf und haben eine Gesamtdicke von 4,5mm. Beim Vakuumriemen 3 werden im mittleren Bereich, welcher ca. 70% der Riemenbreite beträgt, die Zähne weggefräst. Die entstandene Fläche ist wiederum mit einem Polyamidgewebe beschichtet. Diese Fläche dichtet das Vakuum gegenüber den Gleitplatten 12 ab. Die Öffnungen 7 (siehe Figur 3) für die Vakuumübergabe befinden sich in der Riemenmitte. Die Dicke im ausgefrästen oder verjüngten Bereich des Vakuumriemens 3 beträgt ca. 2 mm. Es versteht sich von selbst, dass sowohl die Materialwahl als auch die Dimensionen der Riemen entsprechend der gewünschten Anwendung variiert werden kann.

Auf dem Transportband 2 sind die Trägereinheiten 20 hintereinander in Laufrichtung des Transportbandes 2 befestigt. Eine Trägereinheit 20 besteht dabei aus einer Grundplatte 21, zwei Rastnasen 22 und zwei Sperrschieber 23, 23'. Die Sperrschieber 23, 23' sind so auf der Grundplatte 21 befestigt, dass diese von einer Schliessposition (siehe Sperrschieber 23' in Figur 3) in eine geöffnete Position (siehe Sperrschieber 23 in Figur 3) verschiebbar sind. In der Schliessposition verschliessen die Sperrschieber 23, 23' einen Anschlusskanal 24, welcher durch die Trägereinheit 20 und das Transportband 2 hindurch bis zur Vakuumkammer 10 reicht. Entsprechend gibt der Sperrschieber 23, 23' den Anschlusskanal 24 in der geöffneten Position frei. Die Sperrschieber 23, 23' erlauben ein selektives Anlegen von Unterdruck an die entsprechende Verteilerplatte 30 bzw. an die entsprechenden Saugöffnungen 32 der Verteilerplatte 30. Die Saugöffnungen 32 sind nur angedeutet.

Auf der Trägereinheit 20 kann eine Verteilerplatte 30 montiert werden. Diese Verteilerplatte 30 ist mit Hilfe der Rastnasen 22 an der Trägereinheit 30 befestigt. Die Verteilerplatte 30 weist hierzu Auslösetaster 33 auf, welche seitlich über die Verteilerplatte 30 hervorstehen. Diese Auslösetaster 30 wirken mit den Rastnasen 22 der Trägereinheit 20 zusammen und gewährleisten eine sichere Verriegelung sowie eine einfaches Lösen der Verteilerplatte 30. Wenn die Verteilerplatte 30 auf der Trägereinheit 20 aufgesetzt ist, ist an den Anschlusskanal 24 ein in der Verteilerplatte 30 angeordnetes Kanalsystem (nicht gezeigt) angeschlossen. Dieses Kanalsystem führt den von der Vakuumkammer 10 herrührende Unterdruck Saugöffnungen 32 zu, welche den zu transportierenden Gegenstand 40 auf der Oberfläche der Verteilerplatte 30 fixieren. Im gezeigten Ausführungsbeispiel werden zwei Verteilerplatten 30, 30' benötigt, um den Gegenstand 40 sicher zu halten. Die Anzahl und die Verteilung der Saugöffnungen 32 sind abhängig von der Ausgestaltung des zu transportierenden Gegenstands 40.

Auf der Grundplatte 21 ist eine Kodierung mit den Buchstaben A, B, C, D, E und F gekennzeichnet. Die Kodierung wird mittels entsprechend gesetzten Kodierbolzen 29 realisiert. Durch solche Kodierbolzen kann sichergestellt werden, dass bei der Vorbereitung des Vakuumförderers 1 die Trägereinheiten 20 nur mit den entsprechend der Kodierung ausgestalteten Verteilplatten 30 bestückt werden können. Dadurch wird auf einfache Weise eine fehlerfreie Montage der Verteilplatten 30, insbesondere für Gegenstände 40, welche über mehrere Trägereinheiten 20 hinausragen und verschieden ausgestaltete Verteilplatten 30 benötigen, ermöglicht.

In Figur 2 ist ein Querschnitt durch den Vakuumförderer 1 gemäss Figur 1 quer zur Laufrichtung des Transportbandes dargestellt. Dabei verläuft die Schnittebene durch den Anschlusskanal 24 einer Transporteinheit 20. Die Vakuumkammer 10 ist deutlich zu erkennen. Die Vakuumkammer 10 ist aus einem einseitig offenen Hohlprofil aus Metall, insbesondere aus Stahlblech gebildet. Die offene Seite ist dabei dem Transportband, bestehend aus Vakuumriemen 3 und Zugriemen 4 zugeordnet. Um eine möglichst geringe Reibung zwischen Transportband und Vakuumkammer 10 zu ermöglichen, ist die offene Seite der Vakuumkammer 10 bis auf einen Spalt 11 durch zwei Gleitplatten 12 abgeschlossen. Dabei ist der Spalt 11 in etwa mittig angeordnet, so dass er durch den Vakuumriemen 3 des Transportbandes abgeschlossen wird. Dabei weisen die beiden Gleitplatten 12 im Bereich zum Spalt 11 eine Stufe auf, welche entsprechend im Vakuumriemen 3 als korrespondierende Verjüngung 6 ausgebildet ist. Diese Kombination aus Stufe 13 und Verjüngung 6 ermöglicht ein optimales Dichten zwischen Gleitplatte 12 und Vakuumriemen 3. Die Gleitplatte 12 besteht dabei aus einem hartanodisierten Aluminium. Alternativ kann die Gleitplatte 12 aus einem anderen Material, insbesondere aus rostfreiem Stahl, gefertigt sein. Zur Verbesserung der Gleiteigenschaften kann die Gleitplatte 12 zusätzlich mit einer Gleitschicht, z.B. aus PTFE versehen sein. Die beiden Gleitplatten 12 sind je mit einer Führungsschiene 14 versehen, welche ein präzises Führen der Trägereinheiten 20 erlaubt. Die Trägereinheit 20 weist seitlich je eine korrespondierendes Führungselement 27 auf.

Die Trägereinheiten 20 sind auf dem Zugband 3 befestigt und weisen einen Anschlusskanal 24 auf, welcher durch die Trägereinheit 20 hindurch zum Spalt 11 und in die Vakuumkammer 10 reicht. Der Sperrschieber 23, welcher zum Öffnen/Verschliessen des Anschlusskanals 24 dient, ist in der gezeigten Ausführungsform in der geöffneten Position dargestellt. Um eine unnötige Leckage zu verhindern, ist je einen Dichtring 25, 26 im Anschlusskanal 24 angeordnet, welcher eine dichte Verbindung mit der Öffnung des Vakuumriemens 3 und dem Kanalsystem der Verteilerplatte 30 erlaubt.

Figur 3 zeigt eine Trägereinheit 20 gemäss Figur 1 in vergrösserter Darstellung. Die Grundplatte 21 ist mittels Nieten 28 am Zugriemen 4 befestigt, während der Vakuumriemen 3 lose unter der Trägereinheit 20 liegt. Auf der Grundplatte 21 sind Rastnasen 22 angeordnet, welche ein Fixieren der Verteilerplatte ermöglichen. Die Anschlusskanäle 24 der Trägereinheit 20 sind mit entsprechenden Öffnungen 7 des Vakuumriemens 3 ausgerichtet, so dass eine durchgehende Verbindung zur Vakuumkammer entsteht. Diese Anschlusskanäle 24 können jedoch durch die Sperrschieber 23, 23' geschlossen bzw. geöffnet werden. Die Sperrschieber 23, 23' sind dabei auf der Grundplatte 21 so gelagert, sodass diese zwischen einer Sperrposition (siehe Sperrschieber 23') und einer geöffneten Position (siehe Sperrschieber 23) hin und her bewegt werden können.

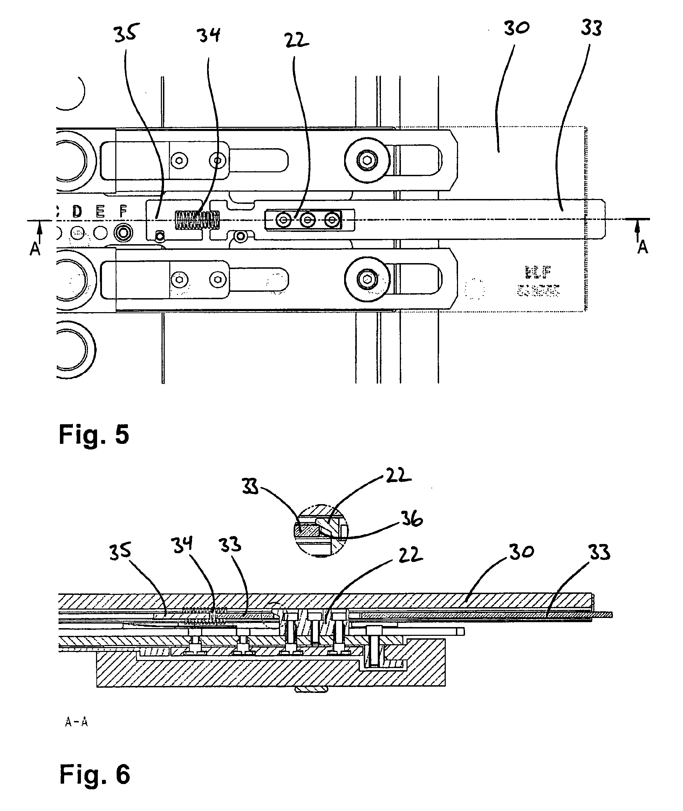

In Figur 4 ist eine einzige Trägereinheit 20 mit Auslösetaster 33 einer Verteilerplatte 30 in perspektivischer Darstellung gezeigt. Dabei ist die Verteilerplatte 30 nur gestrichelt angedeutet. Die Auslösetaster 33 sind so ausgebildet, dass sie mit einer Rastkante 36 (siehe Figuren 6, 7 und 8) die Rastnase 22 hintergreifen und so eine feste Verbindung zwischen Trägereinheit 20 und Verteilerplatte 30 ermöglichen. Die Auslösetaster 33 sind durch ein Federelement 34, welches sich an einem Anschlagelement 35 der Verteilerplatte 30 abstützt, vorgespannt, so dass sich die Verbindung zwischen Verteilerplatte 30 und Trägereinheit 20 nicht unbeabsichtigt lösen kann.

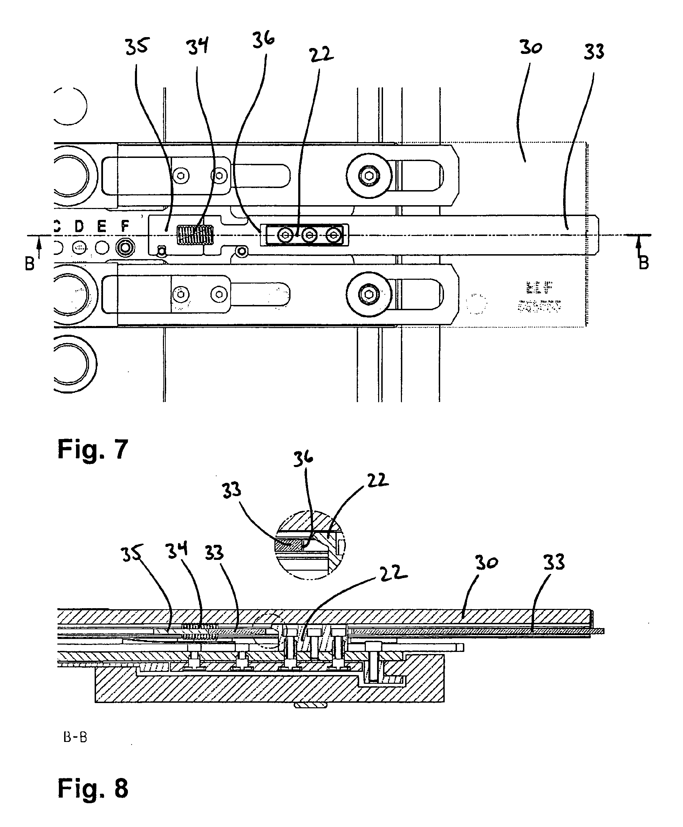

Die Figuren 5 bis 8 zeigen eine vergrösserte Ansicht auf einen Auslösetaster 33 gemäss Figur 4 sowie die entsprechenden Querschnitte. Dabei zeigen die Figuren 5 und 6 den Auslösetaster 33 mit hintergriffener Rastnase 22, während die Figuren 7 und 8 den Auslösetaster 33 frei zeigen. Der Auslöstetaster 33 ist durch das Federelement 34 in Form einer Schraubenfeder vorgespannt, so dass der Auslösetaster 33 in der verriegelten Position mit seiner Rastkante 36 gegen die Rastnase 22 drückt. Eine sichere Verbindung ist so gewährleistet. Erst wenn der Auslösetaster 33, welcher seitlich über die Verteilplatte 30 vorsteht gegen die Kraft des Federelementes 33 gedrückt wird, verschiebt sich der Auslösetaster 33 bis er am Anschlagelement 35 ansteht. Jetzt ist die Rastkante 36 von der Rastnase 22 gelöst, siehe Figuren 7 und 8. Die Verteilerplatte 30 kann von der Trägereinheit entfernt werden.

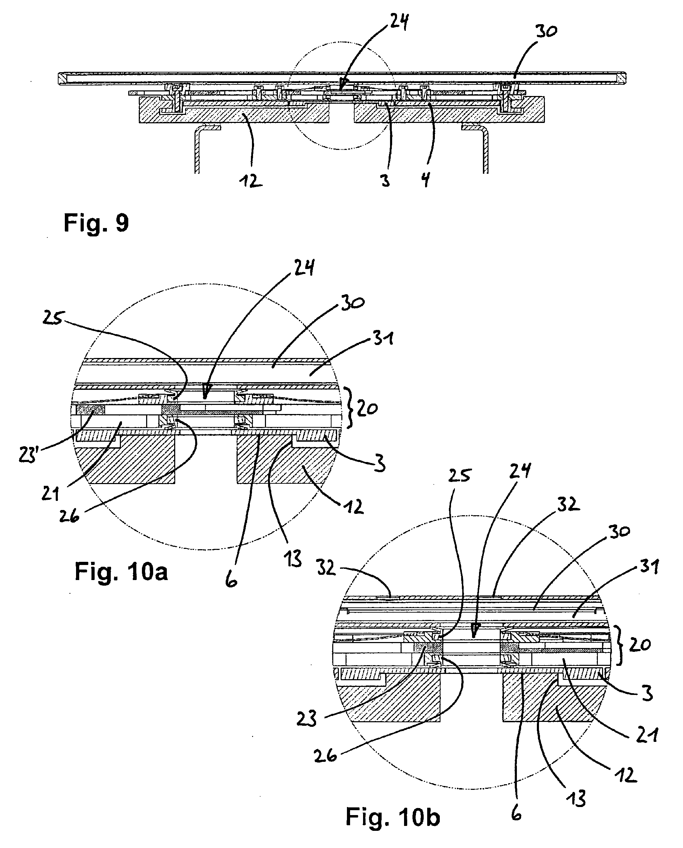

In den Figuren 9, 10a und 10b ist jeweils ein Querschnitt bzw. ein Detail aus dem Querschnitt durch eine Trägereinheit und eine Verteilerplatte 30 quer zur Laufrichtung des Transportbandes gezeigt, wobei die Schnittebene durch einen Anschlusskanal 24 verläuft. Dabei zeigen die Figuren 9 und 10a den verschlossenen Anschlusskanal 24, während der Anschlusskanal 24 in der Figur 10b offen dargestellt ist. Die Grundplatte 21 der Trägereinheit 20 ist direkt auf dem Transportband bzw. auf dessen Zugriemen 4 angeordnet. Der Anschlusskanal 24 mündet auf der einen Seite in einem Dichtring 26 welcher auf dem Vakuumriemen 3 aufliegt und eine dichte Verbindung zwischen Anschlusskanal 24 und der Vakuumkammer gewährleistet. Auf der der Verteilerplatte 30 zugeordneten Seite mündet der Anschlusskanal in einem Dichtring 25, welcher eine dichte Verbindung zur Verteilerplatte 30 und deren Kanalsystem 31 gewährleistet. In Figur 10b sind auch die Saugöffnungen 32 dargestellt, welche zum Festhalten des zu transportierenden Gegenstandes dienen. Unter dem Vakuumriemen 3 sind wiederum die Gleitplatten 12 dargestellt, welche die Reibung zwischen Transportband und Vakuumkammer verringern. Deutlich zu erkennen sind die Stufen 13 der Gleitplatte 12 sowie eine entsprechende Verjüngung 6 des Vakuumriemens 3, welche die Dichtheit gegenüber einer ebenen Anordnung verbessern.

Der Sperrschieber 23' in Figur 10a ist in der geschlossenen Position dargestellt. Der Anschlusskanal 24 ist entsprechend verschlossen, es besteht keine Verbindung zwischen dem Kanalsystem 31 der Verteilplatte 30 und der Vakuumkammer.

In Figur 10b ist der Sperrscheiber 23 in der offenen Position gezeigt, so dass eine Verbindung zwischen Kanalsystem 31 und Vakuumkammer über den offenen Anschlusskanal 24 besteht.

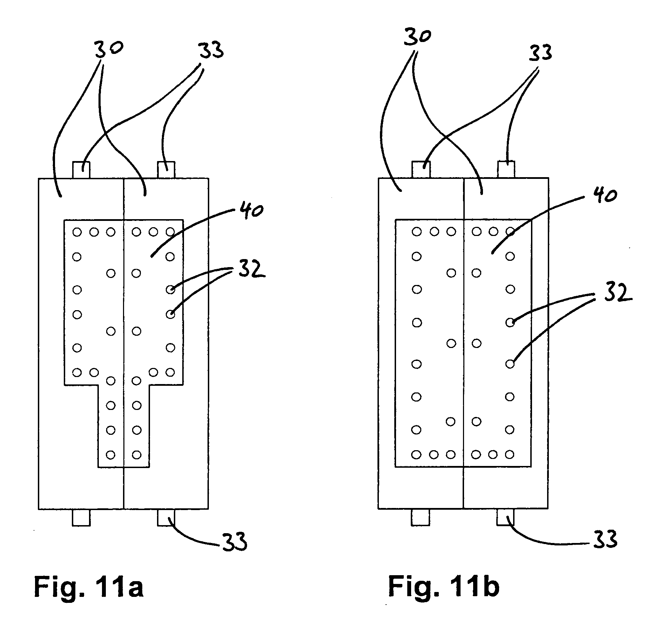

Die Figuren 11a und 11b zeigen eine schematische Darstellung eines flächigen Gegenstandes 40 auf zwei Verteilerplatten 30. Dabei sind die Saugöffnungen 32, welche unter dem Gegenstand angeordnet sind, durch dünne Linien dargestellt. Der Gegenstand 40 überragt dabei eine einzelne Verteilerplatte 30, so dass dieser von zwei Verteilerplatten 30 aufgenommen wird. Es versteht sich von selbst, dass kleinere Gegenstände auch von nur einer Verteilplatte, bzw. noch grössere Gegenstände sogar von mehr als zwei Verteilplatten aufgenommen werden können. Die Anordnung der Saugöffnungen 32 erfolgt entsprechend der Form des Gegenstandes 40. Um von einer ersten Form des zu transportierenden Gegenstandes auf eine andere Form des zu transportierenden Gegenstandes zu wechseln, muss entsprechend die Verteilerplatte 30 ausgetauscht werden. Hierzu wird die Verteilerplatte 30 durch Druck auf die beiden Auslösetaster 33 von der Trägereinheit gelöst und entsprechend ausgetauscht.

## Patentansprüche

1. Vakuumförderer (1) zum Transportieren von insbesondere flächigen Gegenständen (40) umfassend:
- wenigstens ein Transportband (2),
- eine mit einem Unterdruck beaufschlagbare Vakuumkammer (10), welche einseitig durch das Transportband (2) abgeschlossen ist,
- Trägereinheiten (20), welche in Förderrichtung hintereinander auf dem Transportband (2) angeordnet sind, wobei jede Trägereinheit (20) mittels eines Anschlusskanals (24) mit der Vakuumkammer (10) in Wirkverbindung steht, **dadurch gekennzeichnet, dass** auf den Trägereinheiten (20) Verteilerplatten (30) mit mehreren Saugöffnungen (32) lösbar befestigt sind, wobei jede Verteilerplatte (30) ein Kanalsystem (31) aufweist, welches die Saugöffnungen (32) mit dem Anschlusskanal (24) verbindet.

2. Vakuumförderer (1) nach Anspruch 1, **dadurch gekennzeichnet, dass** jeder Anschlusskanal (24) der Trägereinheit (20) ein Verschlusselement aufweist, welches ein selektives Verschliessen des Anschlusskanals (24) erlaubt.

3. Vakuumförderer (1) nach Anspruch 2, **dadurch gekennzeichnet, dass** das Verschlusselement als Schieber (23, 23') ausgebildet ist, welches Betätigungsmittel aufweist, welche seitlich über die Trägereinheit (20) hervorstehen.

4. Vakuumförderer (1) nach einem der Ansprüche 1 bis 3, **dadurch gekennzeichnet, dass** die Vakuumkammer (10) als Hohlprofil ausgebildet ist und auf der dem Transportband (2) zugeordneten Seite zwei durch einen Spalt (11) getrennte Gleitplatten (12) aufweist, welche die Reibung des Transportbandes (2) auf der Vakuumkammer (10) verringert.

5. Vakuumförderer (1) nach Anspruch 4, **dadurch gekennzeichnet, dass** das Transportband (2) im Bereich des Spaltes (11) einen Vakuumriemen (3), insbesondere aus Polyurethan mit Stahldrahtzugsträngen umfasst.

6. Vakuumförderer (1) nach einem der Ansprüche 1 bis 5, **dadurch gekennzeichnet, dass** jede Verteilerplatte (30) ein Verriegelungsmittel aufweist, welches ein lösbares Verriegeln mit einem an der Trägereinheit (20) befestigten Verriegelungselement erlaubt.

7. Vakuumförderer (1) nach Anspruch 6, **dadurch gekennzeichnet, dass** das Verriegelungsmittel mit dem Verriegelungselement verrastbar ist.

8. Vakuumförderer (1) nach Anspruch 7, **dadurch gekennzeichnet, dass** das Verriegelungsmittel ein Auslösetaster (32) ist, welcher seitlich über die Verteilerplatte hervorsteht.

9. Vakuumförderer (1) nach einem der Ansprüche 1 bis 8, **dadurch gekennzeichnet, dass** die Trägereinheiten (20) eine Kodierung aufweisen, so dass nur dieser Kodierung korrespondierend ausgestaltete Verteilplatten (30) auf den Trägereinheiten (20) befestigbar sind.

10. Vakuumförderer (1) nach einem der Ansprüche 1 bis 9, **dadurch gekennzeichnet, dass** die Trägereinheiten (20) seitlich an Führungsschienen (14) geführt sind.

11. Vakuumförderer (1) nach Anspruch 10, **dadurch gekennzeichnet, dass** die Führungsschienen (14) mit der Vakuumkammer (10) verbunden sind.

## Claims

1. Vacuum conveyor (1) for transporting in particular sheet-like articles (40), comprising:
- at least one transporting belt (2),
- a vacuum chamber (10) which can be subjected to negative pressure, and which is closed on one side by the transporting belt (2),
- carrier units (20) which are arranged one after another in the conveying direction on the transporting belt (2), wherein each carrier unit (20) is operatively connected to the vacuum chamber (10) by means of a connection duct (24), **characterized in that** distributor plates (30) having a plurality of suction openings (32) are fastened detachably to the carrier units (20), wherein each distributor plate (30) has a duct system (31) which connects the suction openings (32) to the connection duct (24).

2. Vacuum conveyor (1) according to Claim 1, **characterized in that** each connection duct (24) of the carrier unit (20) has a closure element which allows the connection duct (24) to be selectively closed.

3. Vacuum conveyor (1) according to Claim 2, **characterized in that** the closure element is in the form of a slide (23, 23') which has actuating means which project laterally beyond the carrier unit (20).

4. Vacuum conveyor (1) according to one of Claims 1 to 3, **characterized in that** the vacuum chamber (10) is in the form of a hollow profile and has, on the side assigned to the transporting belt (2), two sliding plates (12) separated by a gap (11), said sliding plates (12) reducing the friction of the transporting belt (2) on the vacuum chamber (10).

5. Vacuum conveyor (1) according to Claim 4, **characterized in that** the transporting belt (2) comprises, in the region of the gap (11), a vacuum belt (3), in particular made of polyurethane having steel wire tension members.

6. Vacuum conveyor (1) according to one of Claims 1 to 5, **characterized in that** each distributor plate (30) has a locking means which allows detachable locking to a locking element fastened to the carrier unit (20).

7. Vacuum conveyor (1) according to Claim 6, **characterized in that** the locking means is latchable to the locking element.

8. Vacuum conveyor (1) according to Claim 7, **characterized in that** the locking means is a triggering button (32) which projects laterally beyond the distributor plate.

9. Vacuum conveyor (1) according to one of Claims 1 to 8, **characterized in that** the carrier units (20) have coding, so that distributor plates (30) that are configured in a manner corresponding only to this coding are fastenable to the carrier units (20).

10. Vacuum conveyor (1) according to one of Claims 1 to 9, **characterized in that** the carrier units (20) are guided laterally on guide rails (14).

11. Vacuum conveyor (1) according to Claim 10, **characterized in that** the guide rails (14) are connected to the vacuum chamber (10).

## Revendications

1. Transporteur à dépression (1), notamment pour le transport d'objets plats (40), comprenant :
- au moins une bande transporteuse (2),
- une chambre à dépression (10) pouvant être alimentée avec une dépression, laquelle est fermée d'un côté par la bande transporteuse (2),
- des unités porteuses (20) qui sont disposées les unes derrière les autres dans la direction de transport sur la bande transporteuse (2), chaque unité porteuse (20) étant en liaison fonctionnelle avec la chambre à dépression (10) au moyen d'un canal de raccordement (24),
**caractérisé en ce que** sur les unités porteuses (20) sont fixées de manière amovible des plaques de distribution (30) avec plusieurs ouvertures d'aspiration (32), chaque plaque de distribution (30) présentant un système de canal (31) qui relie les ouvertures d'aspiration (32) au canal de raccordement (24).

2. Transporteur à dépression(1) selon la revendication 1, **caractérisé en ce que** chaque canal de raccordement (24) de l'unité porteuse (20) présente un élément de fermeture qui permet une fermeture sélective du canal de raccordement (24).

3. Transporteur à dépression (1) selon la revendication 2, **caractérisé en ce que** l'élément de fermeture est réalisé sous forme de coulisseau (23, 23') qui présente des moyens d'actionnement qui font saillie latéralement au-delà de l'unité porteuse (20).

4. Transporteur à dépression (1) selon l'une quelconque des revendications 1 à 3, **caractérisé en ce que** la chambre à dépression (10) est réalisée sous forme de profilé creux et présente, sur le côté tourné vers la bande transporteuse (2), deux plaques de glissement (12) séparées par une fente (11), qui réduisent le frottement de la bande transporteuse (2) sur la chambre à dépression (10).

5. Transporteur à dépression (1) selon la revendication 4, **caractérisé en ce que** la bande transporteuse (2) comprend, dans la région de la fente (11), une courroie à dépression (3), en particulier en polyuréthane, avec des sections de traction en fil d'acier.

6. Transporteur à dépression (1) selon l'une quelconque des revendications 1 à 5, **caractérisé en ce que** chaque plaque de distribution (30) présente un moyen de verrouillage qui permet un verrouillage amovible à un élément de verrouillage fixé à l'unité porteuse (20).

7. Transporteur à dépression (1) selon la revendication 6, **caractérisé en ce que** le moyen de verrouillage peut être encliqueté avec l'élément de verrouillage.

8. Transporteur à dépression (1) selon la revendication 7, **caractérisé en ce que** le moyen de verrouillage est un palpeur de déclenchement (32) qui fait saillie latéralement au-delà de la plaque de distribution.

9. Transporteur à dépression (1) selon l'une quelconque des revendications 1 à 8, **caractérisé en ce que** les unités porteuses (20) présentent un codage, de telle sorte que seulement des plaques de distribution (30) configurées de manière correspondant à ce codage puissent être fixées sur les unités porteuses (20).

10. Transporteur à dépression (1) selon l'une quelconque des revendications 1 à 9, **caractérisé en ce que** les unités porteuses (20) sont guidées latéralement sur des rails de guidage (14).

11. Transporteur à dépression (1) selon la revendication 10, **caractérisé en ce que** les rails de guidage (14) sont connectés à la chambre à dépression (10).
